# FASCICULE DE BREVET EUROPEEN

(11) **EP 1 566 334 B1**
(45) Date de publication et mention de la délivrance du brevet: **10.10.2007**
(21) Numéro de dépôt: 05100898.5
(22) Date de dépôt: 09.02.2005
(51) Int. Cl.: B64C 1/12, B64C 3/18, B64C 3/26

(54) **Arrêt de raidisseur à pentes décalées et panneau muni d'un tel arrêt**
Versteifungsende mit versetzten Steigungen und Panel ausgestattet mit solchem Versteifungsende
Stiffener end with staggered slopes and panel with such stiffener end

(30) Priorité: 20.02.2004 FR 0401711
(43) Date de publication de la demande: 24.08.2005
(73) Titulaire: AIRBUS France, 31060 Toulouse (FR)
(72) Inventeur: Leon-Dufour, Jean-Luc, 31470, SAINT LYS (FR); Sarpy, Bruno, 31150, FENOUILLET (FR)
(74) Mandataire: Schmit, Christian Norbert Marie

(56) Documents cités:
- GB-A- 2 072 579

## Description

La présente invention se rapporte d'une manière générale à des panneaux de structures primaires d'aéronefs, du type « peau + raidisseurs » et plus particulièrement aux parties d'extrémité de ces raidisseurs dénommées arrêts de raidisseur.

Dans les zones de raccordement type jonction voilure ou dans des zones particulières telles que passage d'un cadre, trou de pompe etc..., les raidisseurs doivent être arrêtés pour que la structure retrouve une géométrie de plaque plate.

L'effort supporté par ce raidisseur est alors transféré vers la peau de base qui est renforcée localement pour recevoir ce surplus de charge.

Ces « arrêts de raidisseurs » occasionnent des concentrations de contraintes locales susceptibles d'entraîner des arrachements ou décollements du raidisseur vis à vis de la peau de base. Il en résulte que ces zones spécifiques doivent être dimensionnées avec une grande prudence et nécessitent des renforts conséquents.

Le problème à résoudre est de définir une forme d'arrêt de raidisseur compatible avec le niveau de sollicitation de la zone et engendrant le renfort le plus faible possible.

Notamment le document GB 2072579 A concerne un panneau renforcé comportant une âme de base de matériau plastique renforcée et une pluralité de bandes d'un matériau plastique renforcé de fibres. Chaque bande possède deux régions d'angles et une région intermédiaire. Les régions d'angles constituent des raidisseurs comportant des arrêts en pente douce de raccordement à l'âme.

Les arrêts de raidisseurs conventionnels sont des arrêts à simple pente.

Dans ce type d'arrêt, la problématique est de concilier tenue en traction et tenue en compression. Plus la pente de l'arrêt est faible meilleure est la tenue en traction mais moins bonne est la tenue en compression.

Suivant un autre type d'arrêt de raidisseur, également connu, une double pente est prévue, la première pente étant sensiblement plus forte que la seconde. Si cette solution donne une tenue correcte pour les sollicitations de compression, la tenue en traction demeure médiocre.

En fait, et comme l'ont montré différentes études, la surcontrainte en bout de raidisseur reste directement liée à l'effort supporté par le raidisseur et si les formes d'arrêt actuelles permettent de privilégier la traction ou la compression les variations de tenue sont relativement faibles et ne permettent pas d'obtenir un arrêt de raidisseur réellement performant, compte-tenu du type de panneau en présence qui est un panneau auto-raidi en carbone particulièrement sensible au décollement.

La présente invention vise à proposer une solution permettant d'obtenir au droit de l'arrêt final, c'est à dire au point où la hauteur du raidisseur devient nulle, une tenue en sollicitations de traction bien supérieure à celle rencontrée habituellement.

A cet effet, l'invention a pour objet un arrêt de raidisseur notamment pour panneau de structure primaire du type « peau + raidisseur » pour aéronef, ledit arrêt comportant une pente initiale raccordée à la hauteur courante du raidisseur et une pente finale, caractérisé en ce qu'entre les deux pentes susdites est ménagé au moins un palier à pente sensiblement nulle par rapport au plan de la peau de base dans la zone d'arrêt.

Avantageusement, la longueur du palier est de l'ordre de trois fois la hauteur du raidisseur.

Suivant un mode de réalisation les pentes initiale et finale sont égales et ont une inclinaison par rapport audit plan de la peau dans la zone d'arrêt de l'ordre de 15°.

Avec une telle géométrie une première surcontrainte est générée au point d'inflexion entre la pente initiale et le palier mais elle ne s'applique pas à l'interface raidisseur-peau du fait de son relatif éloignement et n'engendre donc pas de phénomène de décollement. La zone de palier permet d'homogénéiser les contraintes avant d'effectuer l'arrêt final à l'extrémité de la seconde pente.

Ainsi, le transfert des contraintes, du raidisseur vers la peau de base, s'opère en deux temps et en deux zones distinctes en sorte que dans la zone d'arrêt final, à l'interface entre la peau et l'extrémité du raidisseur, les surcontraintes sont très substantiellement réduites, réduisant les risques de décollement.

D'autres caractéristiques et avantages ressortiront de la description qui va suivre d'un mode de réalisation du dispositif de l'invention, description donnée à titre d'exemple en regard des dessins annexés sur lequel :
- Figure 1 est vue partielle en perspective d'un arrêt de raidisseur selon l'invention ;
- Figure 2 représente une éprouvette d'un panneau intrados muni d'un raidisseur conforme à l'invention ;
- Figure 3 est une vue en élévation latérale de l'éprouvette de la figure 2 ;
- Figure 4 est une vue de dessus de l'éprouvette de la figure 3, et
- Figure 5 est une coupe suivant la ligne V-V de l'éprouvette de la figure 4 ;

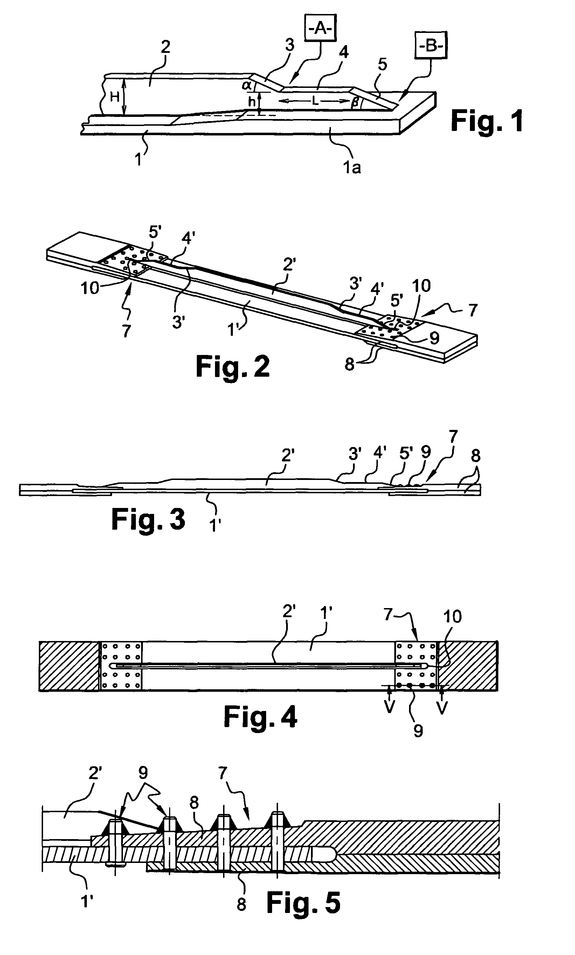

Sur la figure 1, on a représenté en 1 une peau de base d'un panneau à raidisseur constitué d'une âme 2 rapportée sur l'une des faces de la peau, perpendiculairement à celle-ci, de hauteur courante H constante.

Pour arrêter le raidisseur 2, c'est à dire le ramener à une hauteur nulle par rapport à la surface sur laquelle il est rapporté, on réalise, conformément à l'invention, une première pente ou pente initiale 3 à partir de la hauteur courante H, sous une inclinaison déterminée, jusqu'à un point intermédiaire A.

A partir du point A, on ménage un palier 4 parallèle à la face de la peau 1 et s'étendant sur une longueur L déterminée.

Le palier 4 est suivi d'une seconde pente dite pente terminale 5 se terminant en un point B.

Dans le mode de réalisation illustré en figure 1 la peau 1 est légèrement renforcée en épaisseur en 1a, au droit de la zone d'arrêt du raidisseur 2. Plus précisément la face de la peau 1 tournée vers le raidisseur 2 est légèrement surélevée pour une raison qui sera explicitée plus loin.

Les inclinaisons des pentes 3 et 5 par rapport à la face supérieure de la partie surépaissie 1a de la peau, peuvent être variables, identiques ou non.

A titre d'exemple, l'angle α de la pente 3 et l'angle β de la pente 5 sont tous les deux de l'ordre de 15°.

Avantageusement, la longueur L du palier 4 est de l'ordre de trois fois la hauteur courante H du raidisseur 2.

La hauteur h du palier 4, prise par rapport à l'interface peau-raidisseur est avantageusement de l'ordre des deux tiers de la hauteur H.

Comme il a été expliqué plus haut une première surcontrainte est générée en A du fait de la réorientation des efforts à ce point d'inflexion de la pente 3. Toutefois, cette zone du point A est à une distance h de la peau 1 suffisante pour ne pas générer de décollement à l'interface peau-raidisseur.

Le plateau formé par le palier 4 permet d'homogénéiser les contraintes avant d'aborder la pente finale 5, c'est pourquoi le palier 4 doit avoir une longueur L suffisante.

Une seconde surcontrainte est générée à l'extrémité de la pente 5, au point B, mais cette surcontrainte est réduite puisque l'arrêt s'opère sur une partie de raidisseur de hauteur réduite (h).

Il est à noter que plusieurs paliers pourraient être ménagés entre les points A et B à des hauteurs progressivement décroissantes, chaque palier étant précédé et suivi d'une pente.

Le principe de l'invention consiste donc à déconcentrer les contraintes d'arrêt en les répartissant en différentes zones (A,B, etc...) dont seule la dernière (B) se trouve à l'interface peau-raidisseur, mais est substantiellement réduite.

Il faut cependant souligner que la perte de hauteur par palier du raidisseur 2 est de nature à fragiliser ce dernier qui est donc moins stabilisant au-delà du point A. C'est la raison pour laquelle on palliera à cette réduction de tenue du raidisseur par un surépaissisement de la peau 1 dans la zone d'arrêt (1a) ou en recourant dans cette zone à un éclissage comme illustré par la figure 2.

Toutefois, cette zone de renfort peut être réduite ou même ne pas exister si le niveau des surcontraintes le permet.

Sur la figure 2, on a représenté une éprouvette 6 comprenant une peau 1' et un raidisseur 2' dont les extrémités présentent la configuration de la figure 1, à savoir un palier 4' interposé entre une pente initiale 3' et une pente finale 5'.

Dans les deux zones d'arrêts de raidisseur 2', la peau 1' présente la même épaisseur, le renforcement des zones d'arrêt étant réalisé par un éclissage 7 à hauteur de la pente finale 5'.

A cet effet, la peau 1' est prise en sandwich entre deux éclisses 8 fixées par des vis 9, la partie terminale du raidisseur 2', au moins à hauteur de la pente 5', s'engageant dans une fente 10 ménagée dans l'une des éclisses.

Ainsi, par l'enveloppement de l'arrêt de raidisseur on obtient un pas de raidissement constant perpendiculairement au raidisseur 2', la première maille bénéficiant du renfort apporté par la zone de jonction de l'éclissage et pouvant donc se satisfaire dans cette zone d'une hauteur de raidisseur réduite.

Des essais ont été réalisés à partir d'éprouvettes du type de la figure 2 présentant les caractéristiques dimensionnelles suivantes : angle α = angle β =15°, L= 3 x H et h = 2H/3. On a constaté, par rapport à un arrêt de raidisseur conventionnel à pente unique de même inclinaison, que la charge (sollicitations de traction) provoquant le décollement à l'interface peau-raidisseur dans la zone d'arrêt était supérieure de 43 % à celle entraînant dans l'arrêt conventionnel le même décollement. Ce gain est directement proportionnel à la diminution (trente huit pour cent) de hauteur du raidisseur dans la zone du palier 4,4' par rapport à la hauteur courante H.

Il est à noter que la pente des paliers 4,4' est nulle ou sensiblement nulle c'est à dire qu'elle peut être notamment légèrement descendante de quelques degrés en direction de l'extrémité du raidisseur, les effets obtenus étant pratiquement similaires.

## Revendications

1. Arrêt de raidisseur notamment pour panneau de structure primaire du type « peau + raidisseur » pour aéronef, ledit arrêt comportant une pente initiale (3,3') raccordée à la hauteur courante (H) du raidisseur (2,2') et une pente finale (5,5'), **caractérisé en ce qu'**entre les deux pentes susdites est ménagé au moins un palier (4,4') à pente sensiblement nulle par rapport au plan de la peau de base (1,1') dans la zone d'arrêt.

2. Arrêt de raidisseur selon la revendication 1, **caractérisé en ce que** lesdites pentes (3,3' ; 5,5') sont d'égale inclinaison.

3. Arrêt de raidisseur selon la revendication 2, **caractérisé en ce que** l'inclinaison des pentes (3,3' ; 5,5') est de l'ordre de 15°.

4. Arrêt de raidisseur selon l'une des revendications 1 à 3, **caractérisé en ce que** la longueur (I) dudit palier (4,4') est de l'ordre de trois fois la hauteur courante (H) du raidisseur (2,2').

5. Arrêt de raidisseur selon l'une des revendications 1 à 4, **caractérisé en ce que** la hauteur (h) dudit palier (4,4') est de l'ordre des deux tiers de la hauteur courante (H) du raidisseur (2,2').

6. Panneau de structure comportant une peau de base et au moins un raidisseur pourvu d'un arrêt de raidisseur selon l'une des revendications 1 à 5, **caractérisé en ce que** la peau de la base (1,1') est renforcée dans la zone d'arrêt.

7. Panneau selon la revendication 6, **caractérisé en ce que** le renfort est constitué par une surépaisseur (1a) de ladite peau de base (1).

8. Panneau selon la revendication 6, **caractérisé en ce que** le renfort est constitué par un éclissage (7 à 9) dans la zone d'arrêt.

9. Panneau selon la revendication 8, **caractérisé en ce que** l'éclissage (8) enveloppe l'arrêt au moins à hauteur de la pente finale (5'), l'extrémité du raidisseur (2') s'engageant dans une fente (10) ménagée dans ledit éclissage (8).

10. Panneau de structure primaire pour aéronef, du type « peau + raidisseur » comportant au moins un arrêt de raidisseur selon l'une quelconque des revendications précédentes.

## Claims

1. A stiffener stop, in particular for a primary structural panel of the "skin +stiffener" type for an aircraft, said stop including an initial slope (3, 3') connected to the normal height (H) of the stiffener (2, 2') and a final slope (5, 5'), wherein at least one plateau (4, 4') with a slope that is nearly equal to zero with respect to the plane of the base skin (1, 1') in the area of the stop is inserted between the two aforesaid slopes.

2. A stiffener stop according to claim 1, **characterized in that** said slopes (3, 3'; 5, 5') have equal inclinations.

3. A stiffener stop according to claim 2, **characterized in that** the inclination of the slopes (3, 3'; 5, 5') is about 15°.

4. A stiffener stop according to any of claim 1 to 3, **characterized in that** the length (I) of the aforesaid plateau (4, 4') is of the order of three times the normal height (H) of the stiffener (2, 2').

5. A stiffener stop according to any of claim 1 to 4, **characterized in that** the height (h) of said plateau (4, 4') is of the order of two thirds the normal height (H) of the stiffener (2, 2').

6. Structural panel comprising a base skin and at least a stiffener provided with a stiffener stop according to any of claim 1 to 5, **characterized in that** the base skin (1, 1') is strengthened in the area of the stop.

7. Panel according to claim 6, **characterized in that** the strengthening comprises an extra thickness (1 a) of the said base skin (1).

8. Panel according to claim 6, wherein the strengthening is made with a splice (7 to 9) in the area of the stop.

9. Panel according to claim 8, wherein the splice (8) envelops the stop at least at the height of the final slope (5'), with the end of the stiffener (2') fitting into a slit (10) located in the said splice (8).

10. A primary structural panel for aircraft of the "skin +stiffener" type including at least one stiffener stop according to any of the preceding claims.

## Patentansprüche

1. Versteifungsrippenanschlag insbesondere für eine primäre Strukturplatte des Typs "Haut + Versteifungsrippe" für Flugzeuge, wobei der Anschlag eine anfängliche Steigung (3, 3'), die mit der normalen Höhe (H) der Versteifungsrippe (2, 2') in Verbindung steht, und eine abschließende Steigung (5, 5') besitzt, **dadurch gekennzeichnet, dass** zwischen den zwei genannten Steigungen wenigstens ein Plateau (4, 4') mit einer Steigung von im Wesentlichen Null in Bezug auf die Ebene der Basishaut (1, 1') in der Anschlagzone ausgebildet ist.

2. Versteifungsrippenanschlag nach Anspruch 1, **dadurch gekennzeichnet, dass** die Steigungen (3, 3' ; 5, 5') die gleiche Neigung haben.

3. Versteifungsrippenanschlag nach Anspruch 2, **dadurch gekennzeichnet, dass** die Neigung der Steigung (3, 3'; 5, 5') in der Größenordnung von 15° liegt.

4. Versteifungsrippenanschlag nach einem der Ansprüche 1 bis 3, **dadurch gekennzeichnet, dass** die Länge (I) des Plateaus (4, 4') in der Größenordnung der dreifachen normalen Höhe (H) der Versteifungsrippe (2, 2') liegt.

5. Versteifungsrippenanschlag nach einem der Ansprüche 1 bis 4, **dadurch gekennzeichnet, dass** die Höhe (h) des Plateaus (4, 4') in der Größenordnung von zwei Dritteln der normalen Höhe (H) der Versteifungsrippe (2, 2') liegt.

6. Strukturplatte mit einer Basishaut und wenigstens einer Versteifungsrippe, die mit einem Versteifungsrippenanschlag nach einem der Ansprüche 1 bis 5 versehen ist, **dadurch gekennzeichnet, dass** die Basishaut (1, 1') in der Anschlagzone verstärkt ist.

7. Platte nach Anspruch 6, **dadurch gekennzeichnet, dass** die Verstärkung durch eine Überdicke (1 a) der Basishaut (1) gebildet ist.

8. Platte nach Anspruch 6, **dadurch gekennzeichnet, dass** die Verstärkung durch eine Laschenverbindung (7 bis 9) in der Anschlagzone gebildet ist.

9. Platte nach Anspruch 8, **dadurch gekennzeichnet, dass** die Laschenverbindung (8) den Anschlag wenigstens auf Höhe der abschließenden Steigung (5') umhüllt, wobei das Ende der Versteifungsrippe (2') in einem Schlitz (10) in Eingriff ist, der in der Laschenverbindung (8) ausgebildet ist.

10. Primäre Strukturplatte für Flugzeuge des Typs "Haut + Versteifungsrippe", die wenigstens einen Versteifungsrippenanschlag nach einem der vorhergehenden Ansprüche enthält.
